# EUROPEAN PATENT SPECIFICATION

(11) **EP 3 089 906 B1**
(45) Date of publication and mention of the grant of the patent: **28.08.2019**
(21) Application number: 14838827.5
(22) Date of filing: 30.12.2014
(51) Int. Cl.: B62D 5/24, B62D 5/04, B62D 5/09

(54) **HYDRAULICALLY ASSISTED STEERING SYSTEM FOR MOTOR VEHICLES**
HYDRAULISCHES SERVOLENKSYSTEM FÜR FAHRZEUG
DIRECTION ASSISTÉ HYDRAULIQUE POUR VÉHICULE

(30) Priority: 03.01.2014 TR 201400043
(43) Date of publication of application: 09.11.2016
(73) Proprietor: Hema Endüstri Anonim Sirketi, 59501 Tekirdag (TR)
(72) Inventor: MALKOC, Muratcan, TEKIRDAG (TR)
(74) Representative: Kaya, Erdem
(86) International application number: PCT/TR2014/000543
(87) International publication number: WO 2015/102554

(56) References cited:
- EP-A1- 1 582 437
- US-A1- 2007 163 833

## Description

### The Related Art

The invention relates to a hydraulically assisted steering system for motor vehicles, which eliminates the gap in the piston by means of extending the rotary slide valve or the rotary piston and providing direct contact with primary torsion component, and removal of the common rotary component and the coupling unit from the system.

With the present invention, comfortable and safe steering control would be provided for drivers.

### The Prior Art

Hydraulic systems are generally systems that enable movement of two nesting cylinders smoothly within each other via hydraulic fluid without leaking air or liquid. Narrow hydraulic cylinders are provided with forces that enable pushing a couple tons of weight with the help of a wide pump. These long cylindrical tubes that move via a hydraulic fluid pushed by a pump provide a compact system that takes small space and can be controlled remotely. Generally oil is used at the fluid. The principle lying behind this system is the incompressibility of liquids, which provides a much more reliable system compared to air or other gases.

Hydraulic systems are operated by a section where the liquid is stored and another system applying low-energy pressure on this section. The cylindrical system applying pressure on the main storage section needs to have a wider surface area than the other system providing propulsive force. The liquid going from the wider to narrower area provides a more effective and better controlled pressure.

Nowadays, these systems are also used in automobiles and provide great advantage for safe drive and enable easy use of steering wheels with the motion of the liquid instead of geared systems with hard steering movements.

Possible formation of a gap between the common rotary component, coupling unit, and rotary slide valve or rotary piston trio used in the prior art would cause loss of power or torque at a certain steering angle in the steering wheel system. This angle would cause inadequate functioning of a rotary angle sensor that operates with precise values and records the steering angle or driving torque, or in other words, prevent the electrical servo motor from providing the necessary torque assistance at a certain angle. And this prevents the driver from having a comfortable and reliable steering wheel control.

Prior art patent document no US2007163833 discloses a hydraulically driven hydraulic steering system comprising a steering wheel shaft, wherein this system relates to a guidance system connected to an end of the steering component of the vehicle comprising a rotary slide valve or a rotary piston. US2007/163833 discloses indeed a hydraulically assisted steering system for motor vehicles comprising:
- a primary torsion component that enables measurement of the required torque with regard to the angle of twist,
- a rotary angle sensor measuring the angle of twist of the primary torsion component with regard to the rotary slide valve or rotary piston,
- an input shaft, to which the steering wheel shaft and the primary torsion component are connected, and in that; it comprises:
   - a rotary slide valve or rotary piston positioned between the primary torsion and the secondary torsion components, and controlling the pressurization and flow of oil.

Considering all of these applications, there is no system found such as the present invention hydraulically assisted steering system for motor vehicles, which is found between the primary and secondary torsion components and controls the pressurization and flow of oil, and thus can be mounted easily and provides ease of use. With the present invention, it is aimed to eliminate the gap that can be formed between the common rotary component, coupling unit, and rotary slide valve or rotary piston components used in the prior art.

### Brief Description of the Invention

The purpose of the present invention is to extend the rotary slide valve or the rotary piston, enable direct interaction with the primary torsion component, and removal of the common rotary component and coupling unit, so that the rotary slide valve or the rotary piston can be a single-piece unit. The purpose of the invention is to eliminate the gap that can be formed between the common rotary component, coupling unit, and rotary slide valve or rotary piston components used in the prior art.

### Detailed Description of the Invention

The hydraulically assisted steering system for the motor vehicles of the invention is shown in the attached figures, among which:

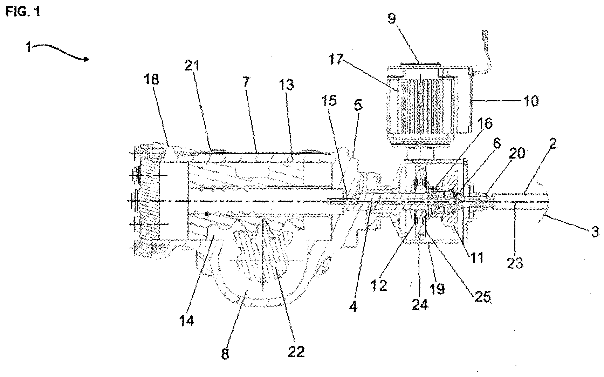

FIGURE 1 is a side section view of the hydraulically assisted steering system for motor vehicles.

All of the parts provided in the figures are individually enumerated and the references to these parts are given below.
1. Hydraulically assisted steering system for motor vehicles
2. Steering wheel shaft
3. Steering wheel control unit
4. Rotary slide valve or rotary piston
5. Steering wheel valve
6. Primary torsion component
7. Hydraulic servo motor
8. Delivery component
9. Electrical servo motor
10. A control or feedback device
11. Rotary angle sensor
12. Worm gear
13. Screw
14. Operating piston
15. Secondary torsion component
16. Driver component
17. Electrical servo motor housing
18. Steering wheel mechanism housing
19. Gear linkage
20. Input shaft
21. Recirculating ball worm and nut steering unit
22. Output shaft
23. Steering system axis
24. Electrical servo motor axis
25. Helical gear
26. Steering wheel actuator

The hydraulically assisted steering system for motor vehicles (1) of the present invention comprises:
- a steering wheel shaft (2) that provides connection between the driver and the steering wheel system (1),
- a steering wheel control unit (3) controlled with the steering wheel via steering by the driver,
- a rotary slide valve or rotary piston (4) positioned between the primary torsion (6) and the secondary torsion (15) components, and controlling the pressurization and flow of oil,
- a steering wheel valve (5) providing the hydraulic assistance to the steering wheel system (1) at a certain load,
- a primary torsion component (6) providing measurement of the required torque with regard to angle of twist,
- a hydraulic servo motor (7) forming pressure force for the operating piston with the pressurized oil coming from the steering wheel valve (5), and thus providing hydraulic assistance for the driver,
- a delivery component (8) enabling transmission of the required torque to the spindle arm for rotation of the wheels,
- an electrical servo motor (9) enabling actuation of the helical gear (25) by means of providing rotational motion to the worm gear (12) with regard to the values of position and speed,
- a control or feedback device (10) controlling the amount of assistance to be taken from the motor by using the data it gathers from the angle sensor (11),
- a rotary angle sensor (11) measuring the angle of twist of the primary torsion component (6) with regard to the rotary slide valve or rotary piston (4),
- a worm gear (12) driven by the electrical servo motor (9) and transmitting assistance torque to the rotary piston (4) by means of rotating the helical gear (25) towards the left and right sides,
- a screw (13) transmitting the force formed by rotational motion to the operating piston (14) via balls, and enabling linear motion of the operating piston (14),
- an operating piston (14) enabling rotation of the output shaft (22) towards the right or the left hand side with the help of the pressure acting on the piston surfaces,
- a secondary torsion component (15) keeping the rotary piston (4) in the central position unless force is applied on the steering wheel,
- a driver component (16) with an angle sensor (11), which is positioned in the input shaft (20),
- an electrical servo motor housing (17) in which the servo motor (9) operates,
- a steering wheel mechanism housing (18) enclosing the steering mechanism (1),
- a gear linkage (19), in which the worm gear (12) and the helical gear (25) are mounted,
- an input shaft (20), to which the steering wheel shaft (2) and the primary torsion component (6) are connected,
- a recirculating ball worm and nut steering unit (21) enabling conversion of rotational motion into linear motion,
- an output shaft (22) providing formation of an output torque by means of a linear motion originating from the piston (14),
- a steering wheel axis system (23) comprising the input shaft (20), rotary piston (4), screw (13), secondary torsion component (15), and the operating piston (14),
- an electrical servo motor axis (24) comprising the worm gear (12) and the helical gear (25),
- a helical gear (25) enabling rotation of the rotary slide valve or the rotary piston (4) via being driven by the worm gear (12), and
- a steering wheel actuator (26) that does not comprise an electrical actuator in the steering wheel system (1).

The hydraulically assisted steering system for motor vehicles (1) of the present invention relates to hydraulically assisted power control systems for vehicles. Said power control system comprises a primary torsion component (6), which connects a steering wheel shaft (2) and a steering wheel control unit (3) to a rotary slide valve (4), or a steering wheel valve (5) to a rotary piston (4).

The pressure of the steering mechanism in the operating chambers are controlled by the steering wheel valve (5) and driven by the hydraulic servo motor (7). The delivery component (8) is driven by an electrical servo motor (9). The electrical servo motor (9) and the hydraulic servo motor (7) simultaneously impact on the delivery component (8) of the steering mechanism during operation of the steering wheel system (1). Moreover, the electrical servo-motor (9) and the vehicle or steering wheel system (1) are controlled by a control and/or feedback control device (11) as a function of the signals originating from a rotary angle sensor (11) found on the steering wheel control unit (3) that records the steering angle and/or driving torque.

The electrical servo-motor (9) impacts on the rotary slide valve or rotary piston (4) by means of a worm gear (12). The primary torsion component (6) and the secondary torsion component (15) are directly connected to the rotary slide valve or steering wheel valve (5) rotary piston (4). The system (1) provides the hydraulic servo-motor (7) with an operating piston (15) driven by a screw (13), which is locked on the rotary piston (4) or the rotary slide valve (4) of the steering wheel valve (5) in a rotatable fashion by means of a second torsion component (15).

A directional stability in the steering wheel system (1) in automatic operation or in the drive assistance mode of the steering wheel system (1) is provided by the rotary slide valve or rotary piston (4), particularly by an electrical servo-motor (9).

In case of a failure in the hydraulic servo-motor (7), the delivery component (8) of the steering mechanism (1) is driven by the steering wheel shaft (2) and the electrical servo-motor (9).

The system (1) operates by deactivation of the worm gear (12) and/or electrical servo-motor (9) found between the electrical servo-motor (9) and the rotary slide valve or rotary piston (4) as a result of actuation of the steering wheel control (3). In case of a failure in the electrical servo motor (9), the steering wheel valve (5) and the hydraulic servo motor (7) can be driven by the steering wheel control unit (3), and a by-pass is formed on the first torsion component (6) by a driver component (16) found between the steering wheel shaft (2) and the rotary slide valve or rotary piston (4).

The electrical servo motor (9) housing (17) is fixed on the steering mechanism housing (18). The electrical servo-motor (9), rotary slide valve or rotary piston (4), the first and second torsion components (6) (15) of the hydraulic servo-motor (7), steering wheel valves (5), and delivery components (8) are combined in a single steering wheel actuator (26).

With the present invention, it is aimed to extend the rotary slide valve or the rotary piston (4) used in the system (1), enable direct interaction with the primary torsion component (6), and removal of the common rotary component and coupling unit, so that the rotary slide valve or the rotary piston (4) can be a single-piece unit. Therefore, the purpose of the invention is to eliminate the gap that can be formed between the common rotary component, coupling unit, and rotary slide valve or rotary piston (4). The invention provides ease of use and comfort.

## Claims

1. A hydraulically assisted steering system for motor vehicles (1) comprising:
- a steering wheel shaft (2) that provides connection between the driver and the steering wheel system (1),
- a steering wheel control unit (3) controlled with the steering wheel via steering by the driver,
- a steering wheel valve (5) providing the hydraulic assistance to the steering wheel system (1) at a certain load,
- a primary torsion component (6) that enables measurement of the required torque with regard to the angle of twist,
- a rotary angle sensor (11) measuring the angle of twist of the primary torsion component (6) with regard to a rotary slide valve or rotary piston (4),
- an input shaft (20), to which the steering wheel shaft (2) and the primary torsion component (6) are connected, and wherein a hydraulic servo motor (7) forming pressure force for the operating piston with the pressurized oil coming from the steering wheel valve (5), and thus providing hydraulic assistance for the driver, a delivery component (8) enabling transmission of the required torque to the spindle arm for rotation of the wheels,
a control or feedback device (10) controlling the amount of assistance to be taken from the motor by using the data it gathers from the angle sensor (11),
- the rotary slide valve or rotary piston (4) is positioned between the primary torsion (6) and a secondary torsion (15) components, and controlling the pressurization and flow of oil,
- a worm gear (12) driven by an electrical servo motor (9) and transmitting assistance torque to the rotary piston (4) by means of rotating the helical gear (25) towards the left and right sides,
the electrical servo motor (9) enabling actuation of the helical gear (25) by means of providing rotational motion to the worm gear (12) with regard to the values of position and speed,
an operating piston (14) enabling rotation of an output shaft (22) towards the right or the left hand side with the help of the pressure acting on the piston surfaces,
- a screw (13) transmitting the force formed by rotational motion to the operating piston (14) via balls, and enabling linear motion of the operating piston (14),
a secondary torsion component (15) keeping the rotary piston (4) in the central position unless force is applied on the steering wheel,
a driver component (16) with the angle sensor (11), which is positioned in the input shaft (20),
an electrical servo motor housing (17) in which the servo motor (9) operates,
- a steering wheel mechanism housing (18) enclosing the steering mechanism (1),
- a gear linkage (19), in which the worm gear (12) and the helical gear (25) are mounted,
- a recirculating ball worm and nut steering unit (21) enabling conversion of rotational motion into linear motion,
- the output shaft (22) providing formation of an output torque by means of a linear motion originating from the operating piston (14),
- a steering wheel axis system (23) comprising the input shaft (20), the rotary piston (4), the screw (13), the secondary torsion component (15), and the operating piston (14),
- an electrical servo motor axis (24) comprising the worm gear (12) and the helical gear (25),
- the helical gear (25) enabling rotation of the rotary slide valve or the rotary piston (4) via being driven by the worm gear (12), and
- a steering wheel actuator (26) that does not comprise an electrical actuator in the steering wheel system (1),
the electrical servo-motor (9) impacts on the rotary slide valve or rotary piston (4) by means of the worm gear (12),
the primary torsion component (6) and the secondary torsion component (15) are directly connected to the rotary slide valve or steering wheel valve (5) rotary piston (4),
the system (1) provides the hydraulic servo-motor (7) with an operating piston (15) driven by a screw (13), which is locked on the rotary piston or the rotary slide valve (4) of the steering wheel valve (5) in a rotatable fashion by means of the second torsion component (5).

## Patentansprüche

1. Ein hydraulisch unterstütztes Lenksystem für Kraftfahrzeuge (1) umfassend:
- eine Lenkspindel (2), die die Verbindung zwischen dem Fahrer und Lenkradsystem (1) herstellt,
- eine Lenkradsteuereinheit (3), die über das Lenkrad durch Lenkung vom Fahrer gesteuert wird,
- ein Lenkventil (5), das bei einer bestimmten Belastung hydraulische Unterstützung für das Lenkradsystem (1) leistet,
- ein erstes Drehteil (6), der die Messung des erforderlichen Drehmoments in Bezug auf den Verdrehwinkel ermöglicht,
- ein Drehwinkelsensor (11), der den Verdrehwinkel des ersten Drehteils (6) in Bezug auf ein Drehschieberventil oder Drehkolben (4) misst,
- eine Antriebswelle (20), mit der die Lenkspindel (2) und das erste Drehteil (6) verbunden sind,
und wobei:
ein hydraulischer Servomotor (7), der mit dem vom Lenkventil (5) kommenden Drucköl eine Druckkraft für den Arbeitskolben ausbildet und somit dem Fahrer eine hydraulische Unterstützung bietet, wobei ein Förderelement (8) die Übertragung des für die Drehung der Räder erforderlichen Drehmoments auf den Lenkspurhebel ermöglicht,
eine Steuer- oder Rückkopplungsvorrichtung (10), die den Umfang der Unterstützung, die von dem Motor aufgenommen werden soll, unter Verwendung der Daten steuert, die sie von dem Winkelsensor (11) sammelt,
- das Drehschieberventil oder der Drehkolben (4) zwischen dem ersten Drehteil (6) und dem zweiten Drehteil (15) angeordnet ist und die Druckbeaufschlagung sowie den Ölfluss steuert,
- ein Schneckengetriebe (12), das von einem elektrischen Servomotor (9) angetrieben wird und durch Drehen eines Schrägzahnrads (25) nach links und rechts Unterstützungsmoment auf den Drehkolben (4) überträgt,
der elektrische Servomotor (9) durch Bereitstellung einer Drehbewegung für das Schneckengetriebe (12) hinsichtlich der Positions- und Geschwindigkeitswerte die Betätigung des Schrägzahnrades (25) ermöglicht,
ein Arbeitskolben (14), der mit Hilfe des auf die Kolbenflächen einwirkenden Drucks die Drehung einer Abtriebswelle (22) in rechts- oder linksgängiger Richtung ermöglicht,
- eine Schnecke (13), die über Kugeln die durch die Drehbewegung gebildete Kraft auf den Arbeitskolben (14) überträgt und eine lineare Bewegung des Arbeitskolbens (14) ermöglicht, ein zweites Drehteil (15), das den Drehkolben (4) in der Mittelstellung hält, sofern keine Kraft auf das Lenkrad ausgeübt wird,
ein Antriebselement (16) mit dem Winkelsensor (11), der in der Antriebswelle (20) positioniert ist,
ein für den elektrischen Servomotor ausgebildetes Gehäuse (17), in dem der Servomotor (9) betrieben wird,
- ein für das Lenkradmechanismus ausgebildete Gehäuse (18), das den Lenkmechanismus (1) umschließt,
- ein Schaltgestänge (19), in dem das Schneckengetriebe (12) und das Schrägzahnrad (25) gelagert sind,
- eine Steuereinheit (21) mit Kugelumlaufschraube und Kugelumlaufmutter, die zur Umsetzung der Drehbewegung in lineare Bewegung dient,
- wobei die Abtriebswelle (22) für die Bildung eines Abtriebsmoments mittels einer von dem Arbeitskolben (14) ausgehenden linearen Bewegung sorgt,
- ein Lenkradachssystem (23) bestehend aus der Antriebswelle (20), dem Drehkolben (4), der Schnecke (13), dem zweiten Drehteil (15) und dem Arbeitskolben (14),
- eine elektrische Servomotorachse (24) bestehend aus dem Schneckengetriebe (12) und dem Schrägzahnrad (25),
- wobei das Schrägzahnrad (25) durch Antrieb über das Schneckengetriebe (12) die Drehung des Drehschieberventils oder des Drehkolbens (4) ermöglicht, und
- ein Lenkradstellglied (26), das kein elektrisches Stellglied im Lenkradsystem (1) aufweist,
wobei der elektrische Servomotor (9) mittels des Schneckengetriebes (12) auf das Drehschieberventil oder Drehkolben (4) einwirkt,
das erste Drehteil (6) und das zweite Drehteil (15) direkt mit dem Drehschieberventil oder Drehkolben (4) des Lenkventils (5) verbunden sind,
und das im System (1) der hydraulische Servomotor (7) mit einem Arbeitskolben (15) versehen ist, der von einer Schnecke (13) angetrieben wird, die mittels der m zweiten Drehteil (5) am Drehkolben oder am Drehschieberventil (4) des Lenkventils (5) auf drehbare Weise befestigt ist.

## Revendications

1. Un système de direction assisté hydrauliquement pour les véhicules à moteur (1) comprenant:
- un arbre de volant (2) qui assure la connexion entre le conducteur et le système du volant (1),
- une unité de commande du volant (3) contrôlée avec le volant via la direction par le conducteur,
- une soupape de volant (5) fournissant l'assistance hydraulique au système du volant (1) à une certaine charge,
- un composant de torsion primaire (6) qui permet de mesurer le couple requis par rapport à l'angle de torsion,
- un capteur d'angle rotatif (11) mesurant l'angle de torsion du composant de torsion primaire (6) en ce qui concerne une soupape de glissière rotative ou un piston rotatif (4),
- un arbre d'entrée (20), auquel l'arbre du volant (2) et le composant de torsion primaire (6) sont connectés,
et où :
un moteur de servo hydraulique (7) formant la force de pression pour le piston moteur avec l'huile pressurisée provenant de la soupape du volant (5), et fournissant ainsi une assistance hydraulique pour le conducteur, un composant de livraison (8) permettant la transmission du couple requis au bras de fuseau pour la rotation des roues,
un dispositif de contrôle ou de rétroaction (10) contrôlant la quantité d'assistance à prendre du moteur en utilisant les données qu'il recueille à partir du capteur d'angle (11),
- la soupape rotative ou le piston rotatif (4) est positionné entre les composants de torsion primaire (6) et de torsion secondaire (15), et le contrôle de la pressurisation et le flux d'huile,
- une vis sans fin (12) entraînée par un moteur de servo électrique (9) et la transmission du couple d'assistance au piston rotatif (4) au moyen d'une rotation de l'engrenage hélicoïdal (25) vers les côtés gauche et droit,
le moteur de servo électrique (9) permettant l'actionnement de l'engrenage hélicoïdal (25) au moyen d'un mouvement de rotation de la vis sans fin (12) en ce qui concerne les valeurs de position et de vitesse,
un piston moteur (14) permettant la rotation d'un arbre de sortie (22) vers le côté droit ou gauche à l'aide de la pression agissant sur les surfaces du piston,
- une vis (13) transmettant la force formée par le mouvement de rotation au piston moteur (14) par l'intermédiaire des boules, et permettant le mouvement linéaire du piston moteur (14),
un composant de torsion secondaire (15) qui maintient le piston rotatif (4) en position centrale à moins que la force ne soit appliquée sur le volant,
un composant conducteur (16) avec le capteur d'angle (11), qui est positionné dans l'arbre d'entrée (20),
un boîtier électrique de moteur de servo (17) dans lequel le moteur de servo (9) actionne,
- un mécanisme de volant abritant (18) le mécanisme de direction (1), - une liaison de vitesse (19), dans laquelle la vis sans fin (12) et l'engrenage hélicoïdal (25) sont montés,
- un ver à billes recirculant et une unité de direction à écrou (21) permettant la conversion du mouvement de rotation en mouvement linéaire,
- l'arbre de sortie (22) fournissant la formation d'un couple de sortie au moyen d'un mouvement linéaire provenant du piston en fonctionnement (14),
- un système d'axe de volant (23) comprenant l'arbre d'entrée (20), le piston rotatif (4), la vis (13), le composant de torsion secondaire (15) et le piston moteur (14),
- un axe moteur servo électrique (24) comprenant la vis sans fin (12) et l'engrenage hélicoïdal (25),
- l'engrenage hélicoïdal (25) permettant la rotation de la soupape à glissière rotative ou du piston rotatif (4) en étant conduit par la vis sans fin (12), et
- un actionneur de volant (26) qui ne comprend pas un actionneur électrique dans le système du volant (1),
le servo-moteur électrique (9) a un impact sur la soupape de glissière rotative ou le piston rotatif (4) au moyen de la vis sans fin (12),
le composant de torsion primaire (6) et le composant de torsion secondaire (15) sont directement reliés à la soupape rotative de glissière ou à la soupape de volant (5) piston rotatif (4),
le système (1) fournit le servo-moteur hydraulique (7) avec un piston moteur (15) entraîné par une vis (13), qui est verrouillée sur le piston rotatif ou la soupape de glissière rotative (4) de la soupape du volant (5) d'une manière rotative au moyen de la deuxième composante de torsion (5).
